# EUROPEAN PATENT APPLICATION

(11) **EP 1 746 823 A1**
(43) Date of publication of application: **24.01.2007**
(21) Application number: 06076394.3
(22) Date of filing: 11.07.2006
(51) Int. Cl.: H04N 5/74, H04N 9/31

(54) **Light projection device**

(30) Priority: 18.07.2005 US 183264
(71) Applicant: Barco, naamloze vennootschap., 8500 Kortrijk (BE)
(72) Inventor: Gerets, Peter, 8800 Roeselare (BE); Coulier, Nico, 9870 Zulte (BE); Karlsson, Mats, 8500 Kortrijk (BE)
(74) Representative: Donné, Eddy

(57) **Abstract**

A light projection device at least comprising a light source and a light valve consisting of an array of light processing elements, wherein a lens unit is provided in between the light source and the concerned light valve.

## Description

The present invention concerns a light projection device.

Known light projection devices generally consist of a light source provided with one or more reflectors, one or more mirrors for collimating the light beam emitted by the light source, a light valve for processing the collimated light beam and a lens through which the processed light beam is projected.

As known, the light beam emitted by the light source is concentrated in a circular spot that is directed to the generally rectangular light valve in a way the entire light valve is equally covered by the light spot.

A disadvantage of said known light projection devices is that the circular light spot has a transversal cross section that is larger than the surface of the light valve, resulting in a poor light yield since a part of the light emitted by the light source is directed next to the light valve.

A solution for the above mentioned disadvantage to regulate the distance between the light source and the concerned mirror, so that the mirror is moved closer to the focal point of the light emitted by the light source and redirected by the concerned reflector.

By doing so, the transversal cross section of the collimated light spot is diminished, so that said circular collimated light spot falls within the boundaries of the light valve, resulting in an optimized light yield.

This known solution however has one important drawback, namely that a part of the light valve, in particular the corners, remain unlit, thereby rendering it impossible to build a rectangular image with a maximal resolution allowed by the light valve.

The goal of the present invention is to solve the above mentioned and other disadvantages.

Thereto the present invention concerns a light projection device that at least comprises a light source and a light valve consisting of an array of light processing elements, wherein a lens unit is provided in between the light source and the concerned light valve.

An advantage of the present invention is that said lens provided in between said light source and the concerned light valve allows to automatically adapt the area of transversal cross section of the light beam emitted by the light source.

This adaptation of the area of the light valve being lit by the light source allows a user to project an image with an optimized light yield in the case the image to be projected is substantially circular or to equally lit the entire surface of the light valve in case the image to be projected is substantially rectangular.

In order to better explain the characteristics of the invention, the following embodiment of a light projection device according to the invention is described as an example only without being limitative in any way, with reference to the accompanying drawings, wherein:
figure 1 schematically represents a light projection device according to the invention;
figure 2 represents, on a larger scale, a view according to arrow F2 in figure 1;
figure 3 represents a same view as figure 2, although in
another stand of the light projection device.

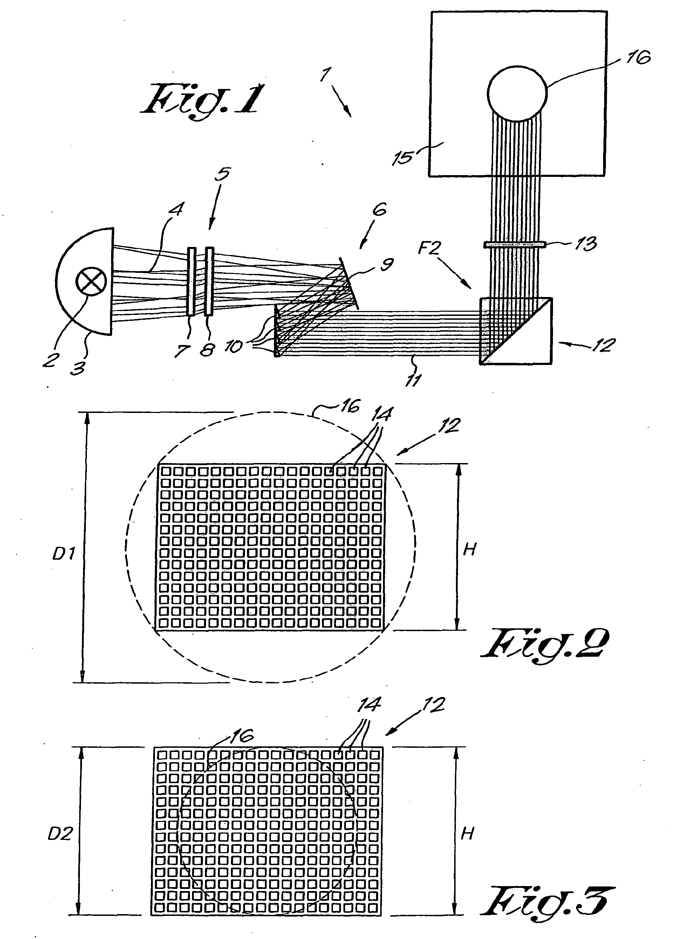

Figure 1 schematically represents a light projection device 1 according to the invention, comprising a light source 2 that is provided with a curved reflector 3.

Said light source 2 is preferably of a type emitting a stable light, such as the known low pressure metal halide lamps.

The reflector 3 reflects the light emitted by the light valve in a specific direction in order to create a strong light beam 4 wherein the majority of the light emitted by the light source 2 is concentrated.

According to the invention, a lens unit 5 and, preferably, a mirror assembly 6 are provided in front of the light source 2, whereby said lens unit 5 preferably consists of an plurality of aligned lenses 7, 8 that can be mutually displaced in an axial direction.

The mirror assembly 6 may consist of, for example, a mirror 9 and some separation elements 10, allowing to convert the light beam 4 emitted by the light source 2 into a collimated light beam 11.

The light projection device 1 further comprises a light valve 12 and a lens 13, whereby the light valve 12 consists of an array of light processing elements 14 such as micro mirrors or liquid crystals.

As known, said light processing elements 14 can individually be switched between two positions, namely a position wherein the incoming light beam 11 is directed trough the lens 13 on a screen 15, and a position wherein the incoming light beam 11 is directed next to the lens 13, each light processing element 14 corresponding to a single pixel of an image 16 to be build.

The use of the above described light projection device 1 according to the invention is easy and as follows.

In a normal position, the lenses 7-8 of the lens unit 5 are spaced apart at a certain distance, such that the incoming light beam 4 of the mirror assembly 6 has a transversal cross section with a diameter D1 that is equal or larger than the length of a diagonal of the light valve.

In that case, the incoming collimated light beam 11, the cross section of which is shown in a dashed line in figure 2, covers the entire light valve 12, such that rectangular images 16 can be projected through the lens with an optimal resolution.

In the case the image 16 to be projected is substantially circular, the distance between the lenses 7 and 8 of the lens unit 5 can be adapted such that the transversal cross section of the light beam 11 has a diameter D2 that is substantially equal to the height H of the light valve 12.

In this last case, shown in figure 3, only a part of the light valve 12 is lit by the light beam 11, such that only this part of the light valve 12 can be used for image building.

It is clear that the last configuration allows to build images 16 with an optimized light yield and thus an enhanced brightness.

Indeed, all the light of the light beam 11 is concentrated on the light valve 12, which is not the case in the configuration wherein the light beam 11 has a diameter that is larger than the height H of the light valve 12.

It is clear that the lenses 7 and 8 can be placed at different mutual distances, thereby allowing to lit a part of the light valve ranging from a single point to the entire surface of that light valve.

In other words, the lens unit 5 allows to change the focal point of the light beam 4 emitted by the light source 2, such that the diameter of the incoming light beam 11 on the light valve 12 can be varied between a value corresponding to the diagonal of the surface of one single light processing element 14 and a value that is equal to the diagonal of the light valve 12.

It is hereby remarked that the brightness of the image to be build increases when the surface of the light valve that is lit, decreases.

The present invention is by no means limited to the above described embodiment given only as an example and represented in the accompanying drawings; on the contrary, such a light valve can be realized in all sorts of variants while still remaining within the scope of the present invention.

## Claims

1. A light projection device at least comprising a light source (2) and a light valve (12) consisting of an array of light processing elements (14), **characterized in that** a lens unit (5) is provided in between the light source (2) and the concerned light valve (12).

2. The light projection device according to claim 1, **characterized in that** the lens unit (5) consists of a plurality of aligned lenses (7-8) that can be mutually displaced in an axial direction.

3. The light projection device according to claim 1, **characterized in that** it comprises a mirror assembly (6) in between the lens unit (5) and the concerned light valve (12).

4. The light projection device according to claim 1, **characterized in that** the lens unit (5) allows to change the focal point of the light beam (4) emitted by the light source (2), such that the diameter of the incoming light beam (11) on the light valve (12) can be varied between a value that is equal to a diagonal of the light valve (12) and a value corresponding to the diagonal of a single light processing element (14) of the light valve (12).
